# EUROPEAN PATENT APPLICATION

(11) **EP 1 467 427 A2**
(43) Date of publication of application: **13.10.2004**
(21) Application number: 04252048.6
(22) Date of filing: 06.04.2004
(51) Int. Cl.: H01M 8/04, H01M 8/24

(54) **Fuel cell device**

(30) Priority: 08.04.2003 JP 2003104333
(71) Applicant: Shinko Electric Industries Co., Ltd., Nagano-shi, Nagano 381-2287 (JP)
(72) Inventor: Horiuchi, Michio, Nagano-shi, Nagano 381-2287 (JP); Watanabe, Misa, Nagano-shi, Nagano 381-2287 (JP); Suganuma, Shigeaki, Nagano-shi, Nagano 381-2287 (JP)
(74) Representative: Rackham, Stephen Neil

(57) **Abstract**

A fuel cell device (10) comprises: two vertically arranged cylindrical fuel cells (10a,10b) different in diameter, each comprising a solid-electrolyte layer (12a) having first and second surfaces, an anode layer (12b) formed on the first surface of the solid-electrolyte layer (12a), and a cathode layer (12c) formed on the other surface of the solid-electrolyte layer (12a). The two fuel cells are mutually arranged in such a manner that the anode layer of one of the fuel cells faces the anode layer (12b) of the other fuel cell (10b) with a predetermined space (14) between them and the space (14) extends vertically from a lower position to an upper position. A fuel supply unit (16,20) is provided for supplying fuel into the space (14) at the lower position thereof so that a flame (18) is formed, in the space (14), in an upward direction in which the space (14) extends. The invention may be applied to a planar configuration.

## Description

The present invention relates to a fuel cell device and, particularly, to a fuel cell device including at least two fuel cells, each having an anode layer on one side of a solid-electrolyte layer and a cathode layer on the other side of the solid-electrolyte layer.

A fuel cell device for generating electric power having a fuel cell disposing in a flame has been proposed, for example, in Japanese Unexamined Patent Publication (Kokai) No. 6-196176.

A fuel cell device described in the above-mentioned patent publication is simply shown in Fig. 10. The fuel cell device shown in Fig. 10 includes a cylindrical fuel cell 100 having a cylindrical solid-electrolyte layer of zirconia, on the inner circumference of which is formed with a cathode layer and on the outer circumference of which is formed with an anode layer.

The fuel cell 100 is disposed so that the anode layer is located in a reducing flame area 106 of a fire flame 104 ignited by a burner 102.

According to the cylindrical fuel cell 100 disposed so that the anode layer is located in the reducing flame area 106, electricity is generated by using oxygen in air fed by the convection due to the flame 104 to the inner circumference on which the cathode layer is formed, which oxygen is reacted with hydrocarbon, hydrogen, various radicals or others existing in the reducing flame area 106 to which the anode layer of the outer circumference is exposed.

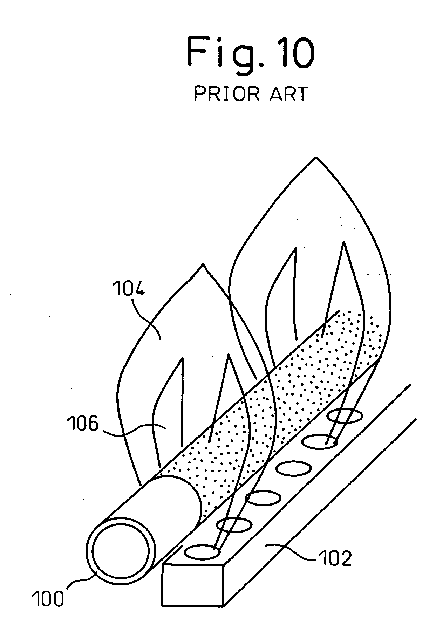

The fuel cell device shown in Fig. 10 needs no external electric power for heating the fuel cell component 100 and, therefore, it is possible for it to deal with an unexpected breakdown of electric power facilities or other problems.

However, as the fuel cell device shown in Fig. 10 uses the reducing flame 106 of the flame 104, it is necessary to bring the outer circumference of the fuel cell 100 into contact with the reducing flame 106 as widely as possible. For this purpose, the fuel cell 100 is disposed to be orthogonal to the flame 104.

Accordingly, as it is necessary to form the flame 104 along the outer circumference of the fuel cell 100, the burner 102 becomes larger in size.

In addition, when a plurality of fuel cells 100 are connected in series or parallel to each other to generate electric power, the burner 102 becomes furthermore larger, resulting in a further enlargement of the size of the fuel cell device.

Further, as an amount of air fed by convection due to the flame 104 to the inner circumference of the fuel cell 100 disposed orthogonal to the flame 104 is not sufficient, it is necessary to forcibly feed air by a blower or another means for the purpose of feeding a sufficient amount of air to the inner circumference of the fuel cell 100, which needs electric power for driving the blower. This is a problem in an unexpected breakdown of electric power.

Also, as the outer circumference of the fuel cell 100 is heated by the flame 104, only part of heat generated by the flame 104 is used for heating the fuel cell 100, and most of heat is dissipated out of the fuel cell system. Accordingly, the heat efficiency for heating the fuel cell 100 becomes low.

Accordingly, a problem to be solved by, and an object of, the present invention is to provide a fuel cell device using a flame capable of effectively using the heat of the flame and capable of feeding sufficient air to a cathode layer.

The present inventors have studied to solve the above-mentioned problems in the prior art, and found that if a cylindrical fuel cell section consists of two cylindrical fuel cells different from each other in inner diameter and arranged concentric with each other so that an anode layer forming one fuel cell is located opposite to an anode layer forming the other fuel cell, it is possible to feed a sufficient amount of air to cathode layers formed in the respective cylindrical fuel cells by the convection due to the flame. Thus the present invention has been achieved by these inventors.

According to the present invention, there is provided a fuel cell device comprising: at least two fuel cells, each comprising a solid-electrolyte layer having first and second surfaces, an anode layer formed on the first surface of the solid-electrolyte layer, and a cathode layer formed on the other surface of the solid-electrolyte layer; the at least two fuel cells being mutually arranged in such a manner the anode layer of one of the fuel cells faces the anode layer of the other fuel cell with a predetermined space between them and the space extends from a lower position to an upper position; and a fuel supply unit for supplying fuel into the space at the lower position thereof so that a flame is formed in the space in a direction in which the space extends.

The at least two fuel cells may preferably have respective cylindrical-shapes, which are concentrically arranged in such a manner that the space defines an annular-shaped space between the anode layers of the adjacent two fuel cells.

Otherwise, the at least two fuel cells have respective flat-shapes, which are arranged in parallel to each other in such a manner that the space defines a flat space having a predetermined width between the anode layers of the adjacent two fuel cells arranged in parallel.

The fuel supply unit may be a gaseous fuel supply unit. Otherwise, the fuel supply unit is a liquid fuel supply unit. The anode layer is preferably made of a fired material mainly composed of NiO in which Li is contained in a solid solution.

According to the inventive fuel cell device, the fuel supply unit is provided at a lower end of the space in which the anode layer forming one fuel cell of a fuel cell section is located opposite to the anode layer forming the other fuel cell thereof, so that the flame is formed upward in the extending direction of the anode layers. Thus, the burner can be formed small in size because it is unnecessary to form the flame along the fuel cell, as in the device known in the prior art.

Further, as the flame is formed in the extending direction of the anode layer and the convection of air due to the flame also occurs in the flame-generating direction, it is possible to feed a sufficient amount of air to the cathode layer solely by the convection, and to eliminate the blower or the like for forcibly supplying air.

As the flame is formed in a space in which the anode layers are located opposite to each other, it is possible to effectively use the heat of the flame for heating the fuel cells without providing additional means for heating the fuel cells.

As described above, according to the inventive fuel cell device, since the burner becomes smaller in size and means for forcibly feeding air such as a blower and means for heating the fuel cells are eliminated, it is possible to form the fuel cell device smaller in size and simpler in production.

### BRIEF DESCRIPTION OF THE DRAWINGS

Fig. 1 is a perspective view for illustrating a fuel cell section constituting a fuel cell device of this invention;
Fig. 2 is a sectional view of the fuel cell section shown in Fig. 1;
Fig. 3 is a sectional view for illustrating one embodiment of means for supplying gaseous fuel to the fuel cell section;
Fig. 4 is a sectional view for illustrating one embodiment of means for supplying liquid fuel to the fuel cell section;
Fig. 5 is a sectional view for illustrating two fuel cells connected in parallel to each other to constitute the fuel cell section shown in Fig. 1;
Fig. 6 is a sectional view for illustrating two fuel cells connected in series to each other to constitute the fuel cell section shown in Fig. 1;
Figs. 7 and 8 are illustrations of another embodiment of a fuel cell section constituting another embodiment of a fuel cell device of this invention;
Fig. 9 is a perspective view of a further embodiment of the present invention using plate type fuel cells; and
Fig. 10 is a schematic view for illustrating a fuel cell device known in the prior art.

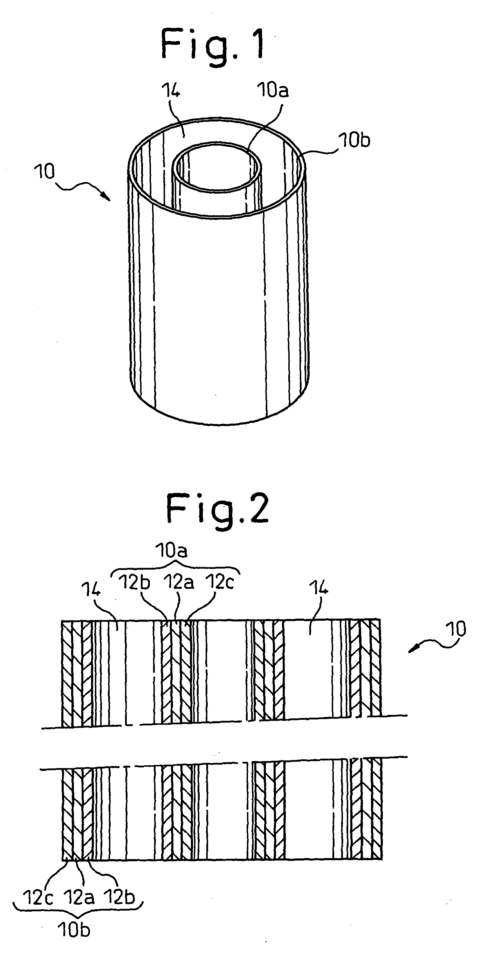

One embodiment of a fuel cell section constituting the inventive fuel cell device is shown in Fig. 1. In the fuel cell section 10 shown in Fig. 1, two vertically arranged cylindrical fuel cells 10a and 10b different in inner diameter from each other are disposed concentric with each other with a space 14 between the two.

As shown in Fig. 2, which is a sectional view of the fuel cell section 10, each of the fuel cells 10a and 10b constituting the fuel cell section 10 is formed by laminating a solid-electrolyte layer 12a, an anode layer 12b and a cathode layer 12c concentrically with each other.

If the fuel cell 10a is smaller in inner diameter than the other fuel cell 10b, the anode layer 12b is formed on the outer circumference of the solid-electrolyte layer 12a and the cathode layer thereof is formed on the inner circumference of the solid-electrolyte layer 12a.

On the other hand, if the fuel cell 10b is larger in inner diameter than the fuel cell 10a, the anode layer 12b is formed on the inner circumference of the solid-electrolyte layer 12a and the cathode layer 12c is formed on the outer circumference of the solid-electrolyte layer 12a.

In such a manner, the anode layer 12b is formed on the outer circumference of the fuel cell 10a, and the anode layer 12b is formed on the inner circumference of the fuel cell 10b. Accordingly, in the fuel cell section 10 formed by inserting the fuel cell 10a having a smaller inner diameter into the fuel cell 10b having a larger inner diameter, a space 14 is obtained in which the anode layer 12b formed on the outer circumference of the fuel cell 10a is located opposite to the anode layer 12b formed on the inner circumference of the fuel cell 10b.

In this regard, the solid-electrolyte layers 12a forming the fuel cells 10a and 10b are preferably made of zirconium oxide partially stabilized by a third group element (in the Periodic Table) such as yttrium (Y) or scandium (Sc), or cerium oxide doped with samarium (Sm) or gadolinium (Gd).

Also, the anode layer 12b is preferably made of a fired material mainly composed of NiO in which Li is contained as a solid solution. This fired material is an-electro-conductive ceramic obtained by adding a Li compound, in a range from 1 to 15 mol% converted into Li₂O equivalent, to NiO and firing the mixture.

In the anode layer 12b thus formed, a metal such as rhodium, platinum, ruthenium, palladium, rhenium or iridium or oxide thereof is blended. According to the fuel cell device constituted by the fuel cells 10a and 10b having the anode layers 12b blended with such metal or oxide thereof, it is possible to exhibit a higher performance for generating electric power than a fuel cell device constituted by the anode layers 12b blended with no metal such as rhodium or others or oxide thereof.

The metal such as rhodium, platinum, ruthenium, palladium, rhenium or iridium or oxide thereof is preferably blended in the anode layer 12b in a range from 1 to 50 wt% interms of the metal.

It is possible to widen a contact area of the metal such as rhodium, platinum, ruthenium, palladium, rhenium or iridium or oxide thereof with a mixed fuel gas by blending 50 vol% or less of either one of samaria-doped ceria, scandia-stabilized zirconia and yttria-stabilized zirconia as an accessary constituent for the anode layer 12b.

Further, the cathode layer 12c is formed of manganese, gallium or cobalt oxide of lanthanum added with a third group element (in the Periodic Table) such as strontium (Sr).

The anode layer 12b and the cathode layer 12c are porous layers having a porosity of 20% or more, preferably in a range from 30 to 70%, more preferably from 40 to 50%.

The fuel cell 10a shown in Figs. 1 and 2 is obtained by using a shape-retaining tubular core of the same material as the cathode layer 12c on which are wrapped a solid-electrolyte cell material to be the solid-electrolyte layer 12a and an anode cell material to be the anode layer 12b or coated with pastes of these materials in this order, which layers are then fired at a predetermined temperature.

The fuel cell 10b having a desired inner diameter is obtained by using a shape-retaining tubular core of the same material as the anode layer 12b on which are wrapped a solid-electrolyte cell material to be the solid-electrolyte layer 12a and a cathode cell material to be the cathode layer 12c or coated with pastes of these materials in this order, which layers are then fired at a predetermined temperature.

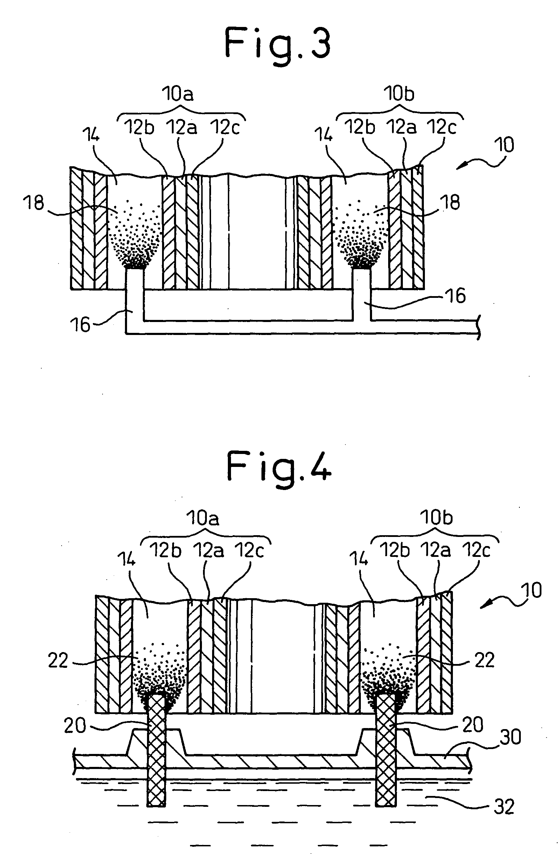

In the fuel cell section 10 formed of two cylindrical fuel cells 10a and 10b different in inner diameter from each other and disposed in concentric with each other at a predetermined space between the both, nozzles 16, 16, ... for supplying gaseous fuel such as butane or propane are provided at a lower end of the space 14 in which the anode layers 12b and 12b are opposite to each other as shown in Fig. 3 in a standing-up state.

When the gaseous fuel is supplied to each of the nozzles 16, 16, ..., flames 18, 18, ... are formed in the extending direction in the space 14 between the anode layers 12b. Accordingly, as the flames 18, 18, ... are encircled by the anode layers 12b and 12b, heat from the flames 18, 18, ... is sufficiently used for heating the fuel cells 10a and 10b without the necessity of other external heating means for heating the fuel cells 10a and 10b.

Further, hydrocarbon, hydrogen or various radicals are usable for the generation of electric power by the anode layers 12b, 12b encircling the flames 18, 18, .... Particularly, in the fuel cell 10a and 10b having the anode layers 12b formed of the fired material mainly composed of NiO in which Li is contained as a solid solution, not only the reducing flame portions of the flames 18, 18, ... but also the oxidizing flame portions are usable for the generation of electric power.

As the flames 18, 18, ... are formed in the extending direction in the space 14 between the anode layers 12b, 12b, the convection of air derived from the flames 18, 18, ... flows in the same direction as the extending direction of the flames 18, 18, ... . Thereby, air is supplied not only to the space 14 but also to the cathode layer 12c so that electromotive force occurs between the anode layers 12b exposed to the flames 18, 18, ... .

While gaseous fuel is used in the fuel supply means shown in Fig. 3, liquid fuel can also be supplied.

One embodiment of means for supplying liquid fuel is shown in Fig. 4. Fig. 4 is a sectional view of the fuel supply means for supplying liquid fuel such as ethanol provided at a lower end of the space 14 in which the anode layers 12b and 12b are opposite to each other while the fuel cell section 10 is in the standing-up state.

In the fuel cell section 10 shown in Fig. 4, the same reference numerals are used for denoting the same elements in Fig. 3 and the detailed explanation thereof will be eliminated.

The means for supplying liquid fuel such as ethanol shown in Fig. 4 is constituted by a tank 30 for storing the liquid fuel 32 such as ethanol and supplying members 20, one ends of which are dipped in the liquid fuel 32 in the tank 30 and the other ends are inserted into a lower end of the space 14 in which the anode layers 12b and 12b are located opposite to each other. The supplying member 20 may be composed of heat-durable fibers collected to convey the liquid fuel upward due to the capillarity thereof. The supplying member 20 may be provided to be movable upward and downward.

when the liquid fuel is vaporized from the upper end of the supplying members 20 and ignited, the flames 22, 22, ... are formed in the extending direction of the anode layers 20b and 12b as shown in Fig. 4. Therefore, in the same manner as the fuel cell device shown in Fig. 3, the fuel cells 10a and 10b can be heated to generate the electric power while using heat, hydrocarbon, hydrogen or various radicals generated from the flames 22, 22, ... .

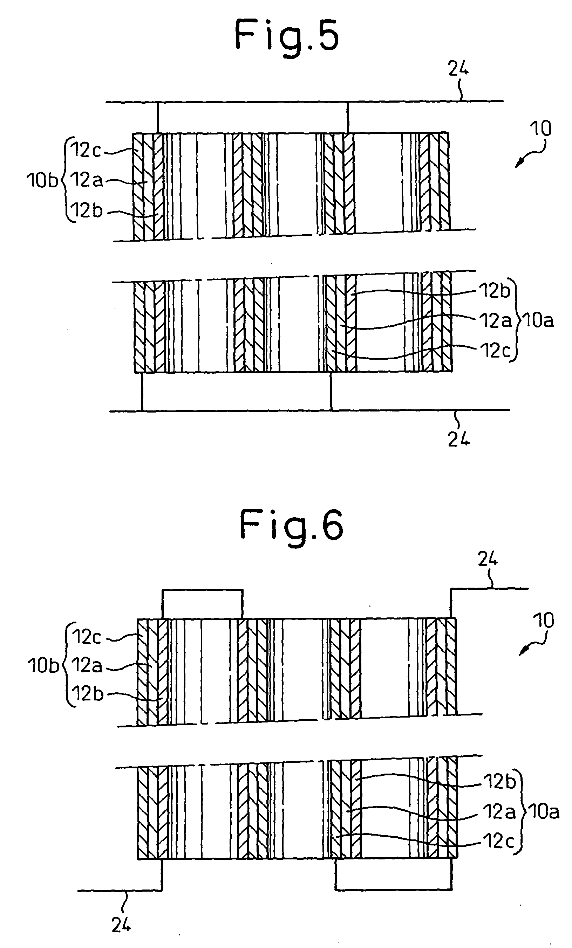

The fuel cell section 10 shown in Figs. 1 to 4 includes the two fuel cells 10a and 10b. The electric power generated from the fuel cells 10a and 10b may be individually taken out. However, as shown in Fig. 5, the fuel cells 10a and 10b may be preferably connected in parallel to each other by wires 24, 24, ..., or as shown in Fig. 6, the fuel cells 10a and 10b may be preferably connected in series to each other by wires 24, 24, ..., so that the electric power is collectively taken out.

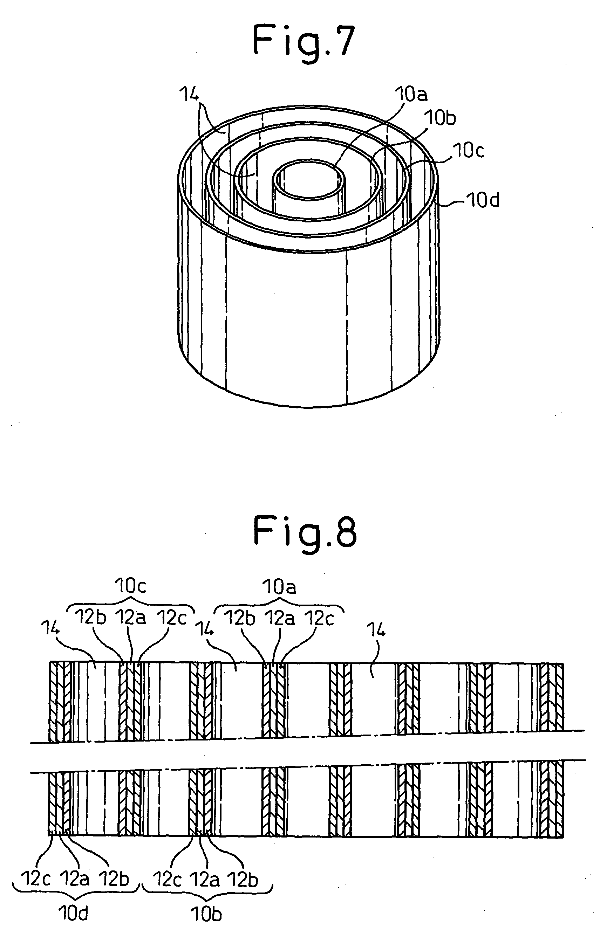

Figs. 7 and 8 are illustrations of another embodiment of a fuel cell section according to this invention. In this embodiment, there are arranged, vertically, four cylindrical fuel cells 10a, 10b, 10c and 10d different in diameter to each other and are arranged in concentric with each other. Therefore, in this embodiment, two annular spaces 14, i.e., inner and outer annular spaces 14, 14, each having a predetermined gap, are defined between the anode layers 12b, 12b of the adjacent cylindrical fuel cells 10a and 10b, and between the anode layers of the adjacent cylindrical fuel cells 10c and 10d, respectively.

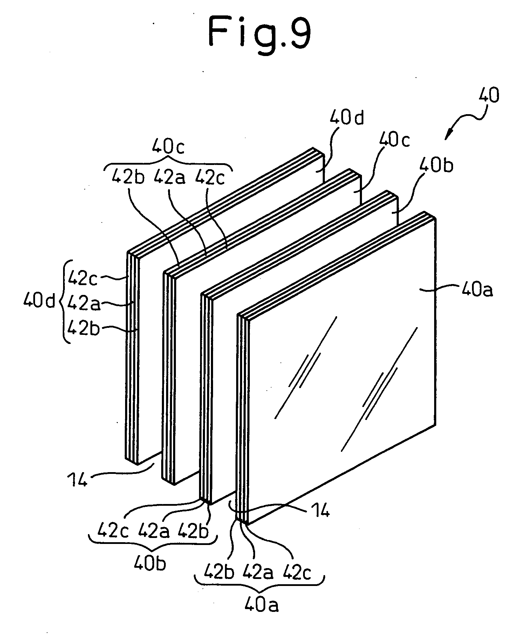

While the fuel cell section 10 shown in Figs. 1 to 8 is formed by disposing the a plurality of cylindrical fuel cells 10a, 10b, ... concentric with each other, it may be possible as shown in Fig. 9 to provide a fuel cell section 40 formed of a plurality of flat-plate type fuel cells.

In the fuel cell section 40 shown in Fig. 9, four flat-plate type fuel cells 40a, 40b, 40c and 40d are disposed at a predetermined space 14, 14 between the adjacent ones.

Each of the fuel cells 40a, 40b, 40c and 40d has an anode layer 42b on one surface of a solid-electrolyte layer 42a and a cathode layer 42c on the other surface of the solid-electrolyte layer 42a.

Of these fuel cells 40a, 40b, 40c and 40d, the fuel cells 40a and 40b and the fuel cells 40c and 40d are disposed so that the anode layers 42b and 42b thereof are opposite to each other.

In the fuel cell section 40 shown in Fig. 9, there are fuel supply means for supplying gaseous or liquid fuel in the spaces 14, 14 in which the anode layers 42b and 42b are located opposite to each other as shown in Fig. 3 or 4.

The fuel cells 40a, 40b, 40c and 40d constituting the fuel cell section 40 shown in Fig. 9 are formed of the same material as the fuel cells 10a and 10b shown in Figs. 1 to 6 and, therefore, a detailed description thereof will be eliminated.

Also, the fuel cells 40a, 40b, 40c and 40d are obtainable by laminating green sheets of predetermined shapes suitable for the respective layers on a solid-electrolyte layer 42a preliminarily formed by the firing, or coating pastes for the respective layers thereon, and thereafter firing the same again.

While the electric power generated from the fuel cells 40a, 40b, 40c and 40d may be individually taken out from the respective fuel cells, it may be taken out in a collective manner by connecting the fuel cells 40a, 40b, 40c and 40d in parallel or series to each other.

According to the inventive fuel cell device, it is possible to effectively use heat of the flame to supply sufficient amount of air to the cathode layer. Therefore, it is possible to generate the electric power by effectively using hydrocarbon, hydrogen or various radicals formed in the flame and oxygen in air on the anode layer while heating the fuel cells by the flames on the anode layer.

As a result, it is possible to form the fuel cell device smaller in size without the necessity of external heating means for heating the fuel cells to a temperature capable of generating the electric power, whereby the fuel cell device according to the present invention is applicable to the outdoor use in camping or for emergency use.

Also, heat generated from the fuel cell device may be used for room heating to save energy.

## Claims

1. A fuel cell device comprising:
at least two fuel cells, each comprising a solid-electrolyte layer having first and second surfaces, an anode layer formed on the first surface of the solid-electrolyte layer, and a cathode layer formed on the other surface of the solid-electrolyte layer;
said at least two fuel cells being mutually arranged in such a manner that said anode layer of one of said fuel cells faces said anode layer of another, adjacent fuel cell with a predetermined space between them and said space extends from a lower position to an upper position; and
a fuel supply unit for supplying fuel into said space at the lower position thereof so that a flame is formed in said space in a direction in which said space extends.

2. A fuel cell device as set forth in claim 1, wherein said at least two fuel cells have respective cylindrical shapes, which are concentrically arranged in such a manner that said space defines an annular-shaped space between said anode layers of the two adjacent fuel cells.

3. A fuel cell device as set forth in claim 1, wherein said at least two fuel cells have respective flat-shapes, which are arranged in parallel to each other in such a manner that said space defines a flat space having a predetermined width between said anode layers of the adjacent two fuel cells arranged in parallel.

4. A fuel cell device as set forth in any preceding claim, wherein said fuel supply unit is a gaseous fuel supply unit.

5. A fuel cell device as set forth in any one of claims 1 to 3, wherein said fuel supply unit is a liquid fuel supply unit.

6. A fuel cell device as set forth in any preceding claim, wherein said anode layer is made of a fired material mainly composed of NiO in which Li is contained in a solid solution.
